# DEMANDE DE BREVET EUROPEEN

(11) **EP 3 574 783 A1**
(43) Date de publication de la demande: **04.12.2019**
(21) Numéro de dépôt: 19188643.1
(22) Date de dépôt: 04.04.2016
(51) Int. Cl.: A41C 3/00

(54) **SOUTIEN-GORGE SANS BRETELLE DORSALE POUR LE PORT DE VETEMENT AVEC GRANDE ECHANCRURE ARRIERE**

(30) Priorité: 02.04.2015 FR 1552858
(62) Demande divisionnaire de: 16716047.2
(71) Demandeur: MJ & Co., 75008 Paris (FR)
(72) Inventeur: WOLFF, Stéphanie, 35000 RENNES (FR)
(74) Mandataire: Touroude, Magali Linda

(57) **Abrégé**

L'invention concerne un soutien-gorge (1) sans bretelle dorsale comprenant deux bonnets (2, 3) reliés entre eux latéralement, chaque bonnet (2, 3) comprenant un bord supérieur (20, 30) et un bord inférieur (21, 31) pourvus respectivement d'une bretelle de soutien (4, 5) et d'une bretelle de tension 6, 7, ainsi qu'un bord latéral extérieur (22, 32) reliant les bords supérieur et inférieur, caractérisé en ce que le soutien-gorge (1) comprend un élément de liaison (8, 9) de la bretelle de tension (6, 7) au bonnet (2, 3), ledit élément de liaison (8, 9) s'étendant sous le bonnet (2, 3) et présentant un arrangement en forme de triangle, deux des sommets du triangle constituant des points de liaison (6A, 6B, 7A, 7B) de l'élément avec le bord inférieur du bonnet (2, 3), le troisième sommet constituant un point de jonction (6C, 7C) de l'élément avec la bretelle de tension (6, 7), l'élément de liaison (8, 9) étant arrangé avec le bonnet (2, 3) de manière à ce que la bretelle de tension (6, 7), au voisinage du point de jonction (6C, 7C), s'étend dans une direction présentant un écartement angulaire avec le plan horizontal compris entre 45 degrés et 90 degrés.

## Description

L'invention concerne un soutien-gorge dos nu permettant le port de vêtements à très grande échancrure arrière tels que des robes de mariée, de soirée ou de prêt à porter.

### ETAT DE LA TECHNIQUE

Il est connu du brevet US3411508 un soutien gorge comprenant une paire de bonnets reliés entre eux latéralement, une paire de bretelles supérieures et une paire de bretelles inférieures s'étendant vers le bas depuis le soutien-gorge. Chaque bretelle inférieure s'étend à partir d'un point immédiatement sous le bord inférieur du bonnet auquel elle est associée et se termine par des moyens de fixation pour permettre leur fixation sur une ceinture d'un autre vêtement. Les bretelles supérieures sont quant à elles respectivement fixées sur le bord supérieur du bonnet par l'une de leur extrémité, et à une extension latérale externe du bonnet par leur autre extrémité.

Le soutien-gorge du brevet susmentionné présente cependant plusieurs inconvénients.

Tout d'abord, il ne propose pas une solution totalement satisfaisante en ce sens qu'il ne garantit pas un aspect totalement invisible lorsqu'il est porté avec des robes présentant des échancrures descendant jusqu'au bas des reins. Le soutien-gorge proposé impose en effet d'être utilisé avec un accessoire ou la ceinture d'un vêtement complémentaire placé autour de la taille pour permettre la fixation des bretelles inférieures. Portée avec une robe ayant une échancrure descendant jusqu'au-bas des reins, l'accessoire reste visible.

Par ailleurs, la qualité du maintien du soutien-gorge dépend de la qualité et du maintien de l'accessoire ou du vêtement sur lequel les bretelles inférieures sont fixées, mais également du maintien de celui-ci. Or, lorsqu'il n'est pas par exemple suffisamment ajusté à la taille de la personne, l'accessoire peut être amené à se déplacer, voire à remonter légèrement sous l'action des bretelles inférieures. L'effet de tension exercée par celles-ci s'en trouve alors amoindri de sorte que le soutien-gorge n'est plus suffisamment maintenu plaqué contre le buste et un décollement de la partie inférieure des bonnets peut être observé. A cela s'ajoute une sensation d'inconfort pour la personne portant le soutien gorge.

En outre, la présence des extensions latérales qui se raccrochent aux bords latéraux externes de chaque bonnet, qui prennent la forme d'une pièce de tissu d'une largeur pratiquement égale à la hauteur du bonnet, reste visible sous les aisselles de l'utilisatrice sous certains vêtements également échancrés sous les aisselles.

L'invention vise à remédier à ces problèmes en proposant un soutien-gorge dos nu assurant un maintien de qualité de la poitrine et un port confortable pour la personne portant le soutien-gorge tout en offrant une invisibilité maximale de celui-ci.

### OBJET DE L'INVENTION

A cet effet, et selon un premier aspect, l'invention propose un soutien-gorge sans bretelle dorsale comprenant deux bonnets reliés entre eux latéralement, chaque bonnet comprenant un bord supérieur et un bord inférieur pourvus respectivement d'une bretelle de soutien et d'une bretelle de tension ainsi qu'un bord latéral extérieur reliant les bords supérieur et inférieur, caractérisé en ce que le soutien-gorge comprend un élément de liaison de la bretelle de tension au bonnet, ledit élément de liaison s'étendant sous le bonnet et présentant un arrangement en forme de triangle, deux des sommets du triangle constituant des points de liaison de l'élément avec le bord inférieur du bonnet, le troisième sommet constituant un point de jonction de l'élément avec la bretelle de tension, l'élément de liaison étant arrangé avec le bonnet de manière à ce que la bretelle de tension, au voisinage du point de jonction, s'étend dans une direction présentant un écartement angulaire avec le plan horizontal compris entre 45 degrés et 90 degrés, et en ce que la bretelle de soutien relie le bord supérieur du bonnet au côté supérieur de l'élément de liaison.

La présence d'un élément de liaison ainsi configuré permet de maintenir la partie basse des bonnets (bas bonnets) plaquée sur le buste de la personne et ainsi éviter le décollement des bonnets, tout en offrant un degré d'inclinaison optimal permettant de diriger les bretelles de tension le plus bas possible dans le dos.

L'absence totale d'extension latérale externe de bonnet sur le bord latéral externe de chaque bonnet remplacée selon l'invention par un bord latéral de bonnet libre de toute pièce de tissu rattachée sur la longueur de ce bord, et comprenant à la place une discrète attache pour une bretelle de soutien, permet au soutien gorge selon l'invention de rester invisible également sous des vêtements échancrés sous les aisselles.

La combinaison de la présence, à partir du bord inférieur de chaque bonnet, de l'élément de liaison, et celle de la liaison de la bretelle de soutien sur le bord latéral libre du bonnet participent au maintien de la poitrine de l'utilisatrice et tout autant à la discrétion du modèle.

Avantageusement, les points de liaison de l'élément de liaison se situent sur le bord inférieur du bonnet associé, entre le bord latéral extérieur et le point médian de ce dernier.

Avantageusement, les points de liaison sont situés à une distance minimale l'un de l'autre égale ou supérieure à 2 cm et/ou égale ou inférieure à 7 cm et/ou de préférence comprise entre 3,5 et 5 cm.

Avantageusement, l'élément de liaison est dimensionné de manière à ce que le point de jonction soit positionné à une distance du bord inférieur du bonnet égale ou supérieure à 20 cm et/ou égale ou inférieure à 45 cm et/ou de préférence comprise entre 28 et 38 cm. Dans la présente invention, la distance est définie perpendiculairement au bord inférieur du bonnet. Selon une variante de réalisation, cette distance est comprise entre 1 et 20 cm, de préférence entre 5 et 15 cm et de manière encore préférée, entre 5 et 8 cm.

Avantageusement, l'élément de liaison est arrangé avec le bonnet de manière à ce que la bretelle de tension, au voisinage du point de jonction, s'étend dans une direction présentant un écartement angulaire avec le plan horizontal compris entre 45 degrés et 90 degrés, et de préférence entre 70 degrés et 90 degrés.

Selon une configuration particulière, l'élément de liaison est formé par une bride, avantageusement élastique, s'étendant sous le bonnet, les extrémités de ladite bride constituant les points de fixation. Avantageusement, la bretelle de tension est raccordée à la bride au moyen d'une attache apte à coulisser le long de ladite bride.

Selon une autre configuration, l'élément de liaison est formé par une pièce de tissu extensible délimitée, entre le point de jonction et chacun des points de liaison, par une bordure élastique.

Avantageusement, chaque bretelle de tension comporte à leur extrémité libre des moyens d'attache réciproque. Par extrémité libre, on entend l'extrémité de la bretelle opposée à l'extrémité fixée à l'élément de liaison.

Avantageusement, la bretelle de tension et/ou la bretelle de soutien est(sont) amovible(s). S'agissant de la bretelle de tension, il peut être prévu qu'elle soit amovible soit au niveau de son point de jonction avec l'élément de liaison, soit au niveau des points de fixation (dans ce cas, c'est l'élément de liaison qui est amovible), soit les deux.

Avantageusement, le bord supérieur (20, 30), et le bord latéral extérieur (22, 32) de chaque bonnet (2, 3) et/ou le côté supérieur (40) de l'élément de liaison (8, 9) sont(est) pourvus respectivement d'une rangée d'au moins deux attaches (ou crochets) aptes à recevoir une attache complémentaire ménagée à chaque extrémité de la bretelle de soutien. La présence de ces rangées d'attaches sur le bord latéral extérieur et/ou le bord supérieur du bonnet permet de régler la position de la (des) bretelle(s) de soutien et ainsi de l'adapter à l'échancrure du vêtement porté.

Selon d'autres caractéristiques avantageuses de l'invention :
- l'attache d'une extrémité de bretelle de soutien est pourvue d'un crochet de sécurité comprenant une partie de fixation à l'extrémité de la bretelle de soutien, deux ouvertures de passage d'une portion libre de l'attache, séparées l'une de l'autre par une portion d'anneau sur laquelle prend appuie la portion d'attache et deux pattes de retenue de la portion d'attache.
- les bords supérieurs des bonnets sont pourvus d'une découpe débouchant sur une entre-gorge du soutien gorge, l'entre gorge présentant une forme filiforme et définissant avec les deux découpes des deux bonnets un espace libre ou échancrure formant décolleté.

L'invention concerne également un ensemble de lingerie, comprenant le soutien gorge ci-dessus, et un bas de sous vêtement comprenant des passants de passage des bretelles de tension. Le bas de sous-vêtement peut consister en une culotte, un string, un boxer, une jupe, un porte-jartelle, une gaine, un collant ou tout autre type de sous vêtement porté sur la partie basse du corps.

Idéalement, le bas de sous vêtement est de type taille basse.

De préférence, le bas de sous vêtement comprend des passants tout le long de sa périphérie supérieure.

Particulièrement, le bas de sous vêtement est de type gainant ou sculptant notamment du fessier de l'utilisatrice.

L'invention concerne également un kit de vente du soutien gorge ci-dessus, comprenant ledit soutien gorge pourvu d'un jeu initial de bretelles de soutien et bretelles de tension, amovibles, et au moins un jeu supplémentaire de deux bretelles de soutien amovibles et de deux bretelles de soutien amovibles de remplacement du jeu initial, de texture et/ou couleur et/ou opacité et/ou longueur et/ou largeur différentes de celles du jeu initial de bretelles de soutien et de tension du soutien gorge.

Idéalement, le kit de vente pourra comprendre au moins deux soutiens gorges de tailles différentes, et un identifiant de type puce RFID ou QR code apte à donner accès à un support d'information distant par la voie d'un terminal mobile connecté à un réseau de communication, donnant accès à un mode d'emploi de mise en place du soutien gorge selon l'invention (éventuellement combiné au bas de sous vêtement), à des informations commerciales (prix, points de vente, disponibilités du produits, possibilités d'achat en ligne...).

### BREVE DESCRIPTION DES FIGURES

D'autres objets et avantages de l'invention apparaîtront au cours de la description qui suit, faite en référence à :
- la figure 1 qui représente une vue schématique de face d'un soutien-gorge selon un mode de réalisation particulier de l'invention, le soutien-gorge étant représenté en situation portée
- la figure 2 qui représente une vue schématique de la face interne d'un soutien gorge selon un deuxième mode de réalisation de l'invention.
   - les figures 3 et 4 représentent respectivement une variante selon laquelle les bretelles de soutien sont fixées sur les bords latéraux des bonnets et une variante selon laquelle elles sont fixées sur le côté supérieur de l'élément de liaison
   - les figure 5 a à d représentent la fixation de l'extrémité des bretelles de soutien par un crochet de sécurité à des bélières internes du bonnet,
   - les figures 6 à 8 représentent des variantes de réalisation : avec bélières le long des bords supérieurs et latéraux des bonnets, et le long du côté supérieur de l'élément de liaison (fig. 6), avec échancrures avant de deux formes différentes (figures 7 et 8)
   - les figures 9 à 11 représentent trois variantes de réalisation d'un ensemble de lingerie selon l'invention porté par une utilisatrice, et vu de devant et de dos (avec soutien gorge seul, figures 9, avec soutien-gorge et jupe combinée (figures 10), avec caleçon ou boxer (figures 11),
   - les figures 12 et 13 représentent respectivement un kit de présentation du soutien de gorge selon l'invention et son document de présentation
   - les figures 14 à 17 représentent les dimensions possibles de différentes tailles de soutien gorge selon l'invention.

### DESCRIPTION DETAILLEE DES FIGURES

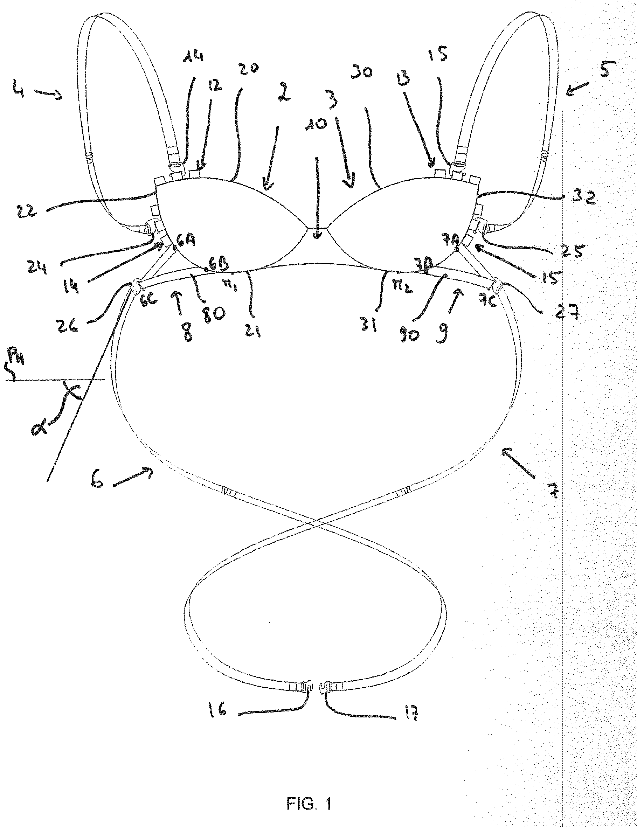

En relation avec la figure 1, il est décrit un soutien-gorge 1 comprenant deux bonnets 2, 3 reliés entre eux latéralement par une pièce d'entre-gorge 10 et deux paires de bretelles amovibles, l'une des paires constituant des bretelles de tension 6, 7 (bretelles inférieures), l'autre paire constituant des bretelles de soutien 4, 5 (bretelles supérieures).

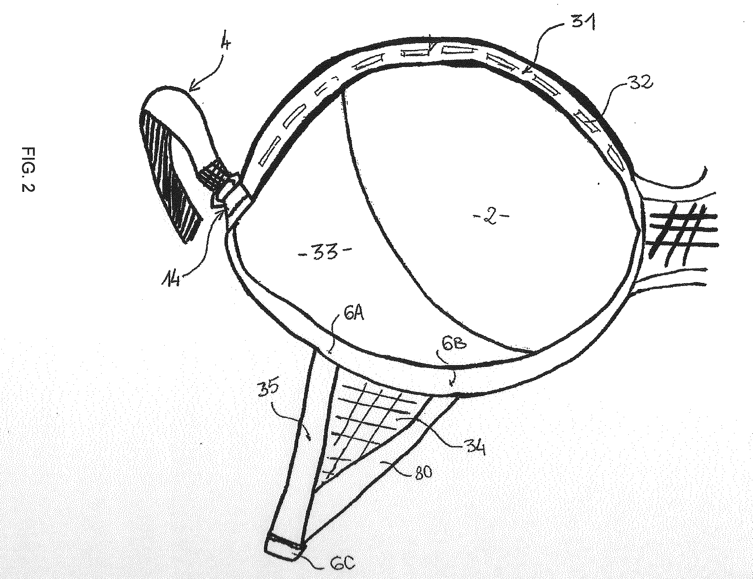

Plus particulièrement, chaque bonnet 2, 3 est délimité par un bord supérieur 20, 30, un bord inférieur 21, 31 et un bord latéral extérieur 22, 32 reliant les bords supérieur et inférieur. Le bord supérieur 20, 30 de chaque bonnet 2, 3 est pourvu d'une bretelle de soutien 4, 5 tandis que le bord inférieur 21, 31 est pourvu d'une bretelle de tension 6, 7. Le bord inférieur est dimensionné pour correspondre au sillon mammaire d'un sein. Avantageusement, pour des bonnets destinés aux seins plus volumineux, conformément à la figure 2, chaque bonnet 3 pourra comprendre un renfort de soutien 33. Ce renfort pourra se présenter sous la forme d'une demi-lune 33 s'étendant en partie basse de bonnet 2. Dans l'exemple illustré, la demi-lune est constituée d'une portion de maille bloquée ou de tulle fixé sur la face interne du bonnet. Selon un mode de réalisation non illustré, ce renfort pourra prendre la forme d'une demi-lune rigide intégrée à la matière constitutive du bonnet, par exemple en plastique, et pourra être configurée suivant une forme améliorant la fonction de renfort.

Les bretelles de soutien 4, 5, avantageusement transparentes et ajustables en longueur, sont agencées de manière à relier le bord supérieur 20, 30 du bonnet 2, 3 associé au bord latéral extérieur 22, 32 de ce même bonnet. Rattachées directement au bord latéral extérieur du bonnet associé, elles entourent le bras de la personne portant le soutien-gorge 1, dégageant ainsi au maximum les épaules et plus particulièrement les omoplates.

Les bretelles de tension 6, 7, avantageusement transparentes et ajustables en longueur, sont quant à elles prévues pour se croiser dans le bas du dos, de préférence au bas des reins, et attachées l'une à l'autre à l'avant, par des moyens d'attache réciproque 16, 17 ménagées à leurs extrémités libres.

Chaque bretelle de tension 6, 7 est raccordée à un bonnet 2, 3 par un élément de liaison 8, 9, lequel s'étend sous le bonnet correspondant et présente un arrangement en forme de triangle, deux des sommets du triangle constituant des points de liaison 6A, 6B, 7A, 7B de l'élément avec le bord inférieur du bonnet, le troisième sommet constituant un point de jonction 6C, 7C de l'élément avec la bretelle de tension 6, 7.

Dans le mode de réalisation illustré, l'élément de liaison 8, 9 consiste en une bride plate 80, 90, avantageusement élastique, arrangée pour s'étendre sous le bonnet 2, 3 associé, ses deux extrémités étant fixées sur le bord inférieur 21, 31 dudit bonnet. La bretelle de tension 6, 7 est maintenue sur la bride 80, 90 associée au moyen d'une attache 26, 27 dont est pourvue l'extrémité de ladite bretelle. Les extrémités de chaque bride 80, 90 constituent ainsi les points de fixation 6A, 6B, 7A, 7B au bonnet associé 2, 3 tandis que le point de jonction 6C, 7C correspond à l'attache 26, 27 de la bretelle de tension 6, 7 associée.

Dans l'exemple illustré, l'attache 26, 27 est du type crochet sécurité. L'avantage d'une telle attache (crochet pouvant coulisser le long de la bride) est que lorsque le soutien-gorge 1 est mis en place, et les bretelles de tension 6, 7 fixées l'une à l'autre par leurs extrémités libres 16, 17, l'extrémité portant l'attache 26, 27 s'auto-ajuste, adoptant une position optimale à la morphologie de la personne. Il est bien entendu évident que l'invention n'est pas limitée à ce type d'attache et qu'il peut être prévu tout autre moyen approprié permettant une fixation amovible sans sortir du cadre de l'invention.

Avantageusement, chaque bride 80, 90 est fixée sur le bonnet associé 2, 3 de manière à présenter deux points de fixation distincts (extrémités) situés dans la moitié externe du bord inférieur 21, 31. Plus particulièrement, les points de liaison 6A, 6B, 7A, 7B de la bride 80, 90 se situent sur le bord inférieur 21, 31 du bonnet associé 2, 3, entre le bord latéral extérieur 22, 32 et le point médian M1, M2 de ce dernier. Dans le mode de réalisation illustré, l'un des points de fixation 6B, 7B est situé à proximité du point médian M1, M2 tandis que l'autre 6A, 7A est disposé au voisinage de la jonction entre le bord inférieur 21, 31 et le bord latéral extérieur 22, 32 du bonnet. Avantageusement, les points de fixation 6A, 6B sont disposés à une distance l'un de l'autre de l'ordre de 3.5 à 5 cm. Le point de jonction 6C, 7C est quant à lui positionné à une distance du bord inférieur du bonnet comprise entre 28 et 38. En déportant ainsi l'accroche de la bretelle de tension du bonnet, le dégagement du dos s'en trouve amélioré.

Avantageusement, chaque bride 80, 90 est arrangée avec le bonnet 2, 3 associé de manière à ce que la bretelle de tension 6, 7 associée s'étend, au voisinage du point de jonction, dans une direction présentant un écartement angulaire avec le plan horizontal n'allant pas au-delà de 90 degrés. Un écartement avec le plan horizontal supérieur à 90 degrés entrainerait en effet un décollement du bonnet 2, 3 du buste de la personne portant le soutien-gorge 1. Par ailleurs, afin d'éviter que les bretelles de tension 6, 7 ne soient visibles dans les cas où le vêtement présente un profond décolleté dans le dos, il est avantageux de prévoir un arrangement de la bride 80, 90 avec le bonnet 2, 3 associé de manière à ce que chaque bride 80, 90 s'étende dans une direction présentant un écartement angulaire de 45 degrés au moins avec le plan horizontal. Cependant, et bien que non illustré, un agencement préféré de la bride 80, 90 sera celui assurant un écartement de la bride 80, 90 par rapport au plan horizontal compris entre 70 et 90 degrés.

Dans le mode de réalisation illustré, chaque bride 80, 90 est formée par une seule bande, celle-ci étant pliée au niveau de la jonction 6C, 7C avec la bretelle de tension 6, 7 associée. Selon une variante de réalisation non illustrée, il peut être prévu une bride formée de bandes distinctes reliées entre elles au niveau de leur extrémité libre. Par extrémité libre on entend les extrémités opposées aux extrémités des bandes fixées au bonnet 2, 3.

Dans le mode de réalisation précédemment décrit, les bretelles de soutien 4, 5 et de tension 6, 7 sont amovibles. Il est bien entendu évident que l'invention ne se limite pas à cette configuration et qu'il peut être prévu que les bretelles de tension 6, 7 et/ou de soutien 4, 5 soient non détachables des bonnets auxquels elles sont associées. Par ailleurs, les bretelles de tension 6, 7 sont formées de deux lanières distinctes. Selon une variante de réalisation, il peut être prévu que les bretelles de tension 6, 7 forment une seule et même lanière. On comprend dans ce cas que la lanière devra être préalablement disposée autour du buste de la personne pour être ensuite fixée sur les éléments de liaison 8, 9 par ses extrémités puis ajustées à la personne portant le soutien-gorge.

Selon un autre mode de réalisation de l'invention, il peut être prévu que l'élément de liaison 8, 9 constitue l'extrémité même de la bretelle de tension 6, 7, l'élément de liaison et le bonnet associé comprenant respectivement des moyens d'accroche réciproque permettant une accroche amovible de l'élément de liaison au bonnet concerné.

Selon la variante illustrée sur la figure 2, l'élément de liaison (8, 9) est formé par une pièce de tissu extensible 34 délimitée, entre le point de jonction 6C et chacun des points de liaison 6A, 6B, par une bordure élastique 35.

Dans le mode de réalisation illustré sur la figure 1, chaque bretelle de soutien 4, 5 est fixée de manière amovible au bonnet 2, 3 par ses extrémités, l'une des extrémités étant fixée sur le bord supérieur 20, 30 dudit bonnet, l'autre étant fixée sur le bord latéral extérieur 22, 32. Pour ce faire, les extrémités des bretelles de soutien 4, 5 sont équipées d'attaches 14, 15, 24, 25 de type crochet sécurité aptes à s'enficher dans des bélières (ou boucles d'attache) 12, 13, 14, 15 ménagées à cet effet en bordure supérieure 20, 30 et sur le bord latéral extérieur 22, 32 du bonnet 2, 3 associé. Dans l'exemple illustré, le bord supérieur et le bord latéral extérieur sont pourvus respectivement de trois boucles d'attache ou bélières. Cela permet ainsi d'adapter le positionnement des bretelles supérieures à l'échancrure du vêtement mais également à la morphologie de la personne portant le vêtement. Il est bien entendu évident qu'il peut être prévu un nombre différent de boucles d'attache sans sortir du cadre de l'invention.

Avantageusement, les boucles d'attache 14, 15 situées sur le bord supérieur 20, 30 du bonnet 2, 3 sont placés de manière à être les plus proches possible de la jonction entre le bord supérieur et le bord latéral du bonnet 2, 3 afin d'assurer l'invisibilité des bretelles. Selon le mode de réalisation de la figure 2, les bélières du bord supérieur du bonnet sont remplacées par un élastique bord à cheval 31 avec boutonnières intégrées 32 longeant le bord supérieur du bonnet sur sa face interne, ces boutonnières constituant des fentes 32 dans chacune desquels le crochet sécurité 14 de la bretelle de soutien 4 peut venir s'engager. L'avantage de cette réalisation est de rendre encore plus invisible le système d'accroche de la bretelle de soutien sur le bord supérieur du bonnet.

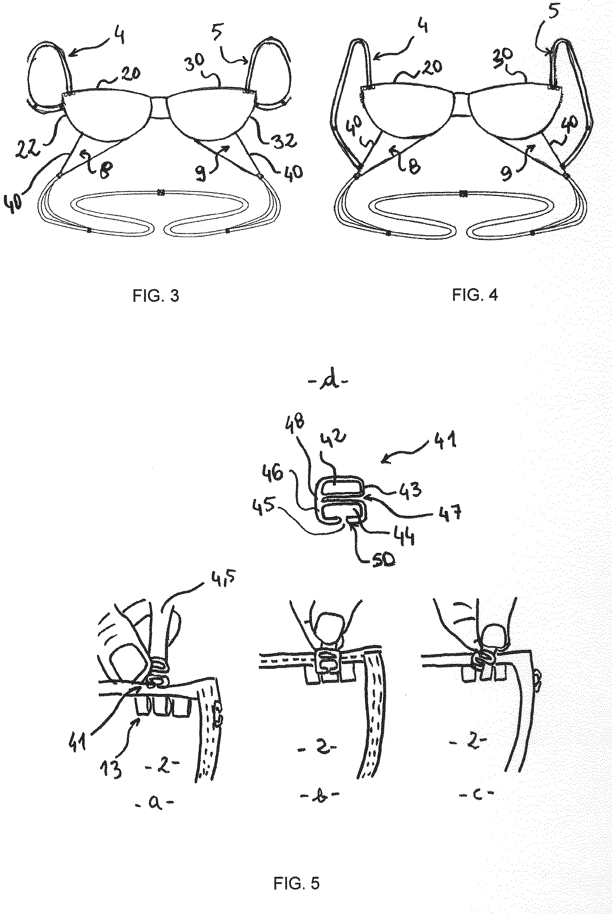

Comme indiqué précédemment, les bretelles de soutien 4 et 5 sont fixées d'une part par l'une de leurs extrémités sur le bord supérieur 20, 30 du bonnet correspondant et d'autre part soit :
- comme également mentionné précédemment, sur le bord latéral 22, 32 du bonnet correspondant (figure 3)
- soit conformément à une variante de réalisation intéressante, sur le bord supérieur 40 de l'élément de liaison 8, 9. Cette variante pouvant s'avérer plus adaptée à certains vêtements, ou plus confortable que celle de la figure 3 à certaines utilisatrices.

Conformément aux figures 5a, 5b, 5c, la fixation de la bretelle de soutien 4, 5, s'effectue de façon encore plus sécurisée, à l'aide de bélières internes 13 fixées par une face arrière, sur la face interne de la coque 2, la face avant de la bélière délimitant avec la face arrière fixée une ouverture de passage pour un crochet et par l'intermédiaire d'un crochet sécurisé 41, qui comporte comme mieux visible sur la figure 5d :
- une ouverture supérieure de passage et de fixation de ladite bretelle 4, 5, délimitée par un anneau fermé 43,
- une ouverture inférieure 44 de passage de la bélière 13, délimitée par un anneau ouvert 46 par une fente 45 en communication avec l'ouverture inférieure 44, anneau ouvert 46 définissant de part et d'autre de la fente, deux pattes de retenue 50.
- une ouverture intermédiaire 47 délimitée par le bord inférieur de l'anneau fermé 43 et par le bord supérieur de l'anneau ouvert 46 les deux anneaux 43, 46 étant reliés par un pont de matière 48, avec les bords délimitant l'ouverture intermédiaire, un passage en forme de C.

La fixation du crochet sécurisé 41 d'une bretelle sur une bélière 13 s'effectue en faisant passer la face avant de la bélière 13 à travers l'ouverture intermédiaire 47 du crochet sécurisé 41 (figure 5c) puis en amenant les pattes de retenue 50 à l'avant de la bélière 13 (figure 5b).

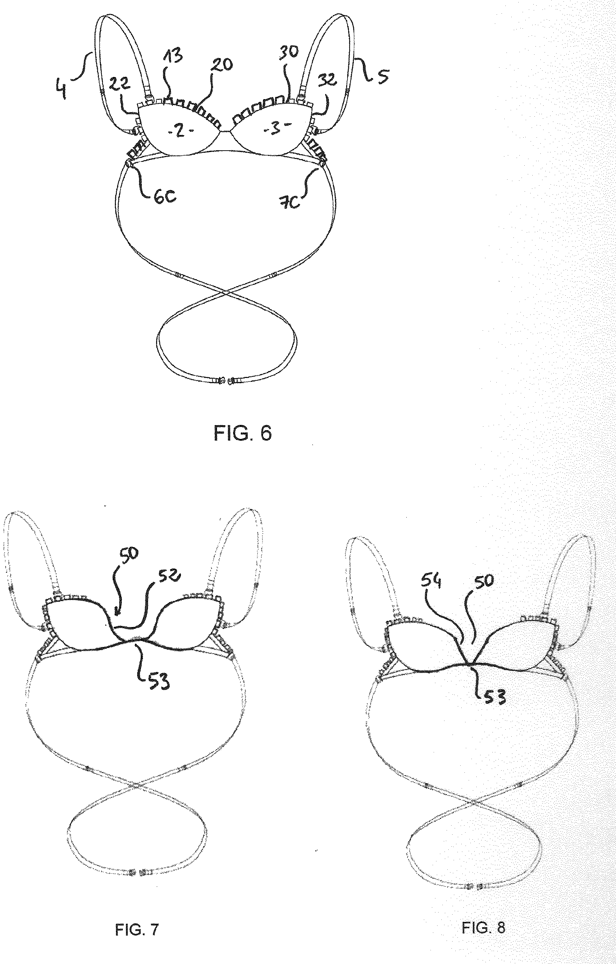

La variante de réalisation de la figure 6 est conçue pour permettre la plus grande adaptabilité à différentes morphologies d'utilisatrices avec la possibilité que:
- le bord supérieur 20, 30 de chaque bonnet, puisse en option être muni sur tout son long, de bélières (internes ou externes)
- le bord latéral externe 22, 32 de chaque bonnet, puisse en option également être muni sur tout son long de bélières (externes ou internes)
- le côté supérieur 40 de l'élément de liaison 8, 9 puisse en option être muni sur tout son long (entre sa fixation au bonnet et le point de jonction correspondant 6C, 7C)

Les variantes des figures 7 et 8 permettent de définir une échancrure avant 50 permettant le port de vêtements décolletés à l'avant grâce à des découpes réalisés sur les bords supérieurs 20, 30, des deux bonnets 2, 3 et la suppression de la pièce d'entre gorge 10, remplacée pour un élément plus fin 53. Dans l'exemple de la figure 7, la découpe 52 présente une forme curviligne (sorte de « S » inversé), alors que la découpe 54 représentée sur la figure 8 est droite et forme avec la découpe du bonnet adjacent, un décolleté en forme de V.

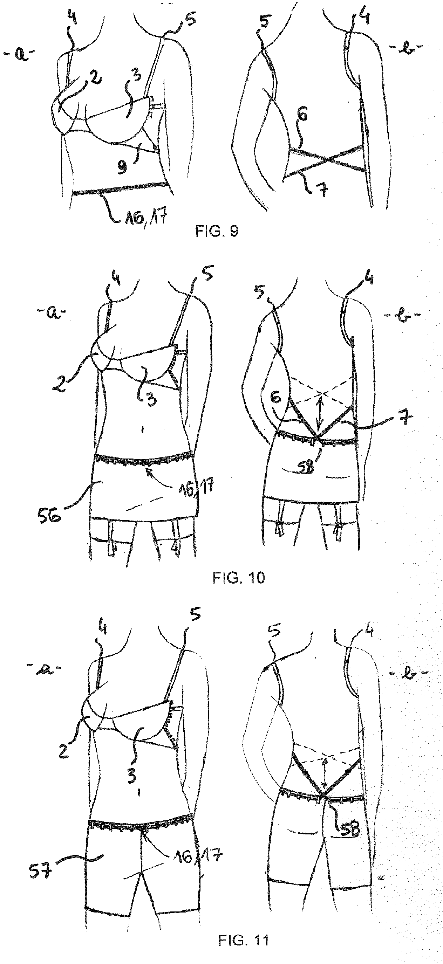

Les représentations des figures 9 à 11 permettent de mettre en évidence le positionnement du soutien gorge selon différentes variantes de réalisation sur une utilisatrice:
- la première (figure 9) conformément à laquelle le soutien gorge est utilisé seul, c'est à dire indépendamment de tout sous-vêtement de type culotte ou caleçon et permet un passage des bretelles de tension 6, 7 croisées au niveau des reins de l'utilisatrice (figure 9b) et repassant à l'avant pour être solidarisées l'une à l'autre au moyen des crochets 16, 17 au niveau du nombril de l'utilisatrice,
- la deuxième et la troisième (figures 10 et 11) conformément auxquelles le soutien gorge est utilisé en combinaison avec un sous vêtement taille basse éventuellement gainant ou sculptant (une jupe pour la variante de la figure 10 en matière élastique ou un caleçon 57 pour la variante de la figure 11) dont le bord supérieur se retrouve situé environ 10 cm en dessous du nombril (et des reins) de l'utilisatrice, et qui est pourvu de passants externes 58 pour le passage des bretelles de tension 6, 7. Ces bretelles 6, 7 sont croisées juste au dessus du bord supérieur du sous vêtement taille basse et s'insèrent entre deux passants arrière centraux, pour longer extérieurement le bord supérieur du sous vêtement 56, 57, en passant à travers les autres passants pour s'accrocher l'une l'autre par les crochets 16, 17 à l'avant du sous vêtement 56, 57. L'utilisation du sous vêtement taille basse en combinaison avec le soutien gorge selon l'invention permet d'abaisser encore le lieu de croisement des bretelles de tension dans le dos de l'utilisatrice (environ 10 cm) et ainsi le port de vêtements encore plus échancrés dans le dos.

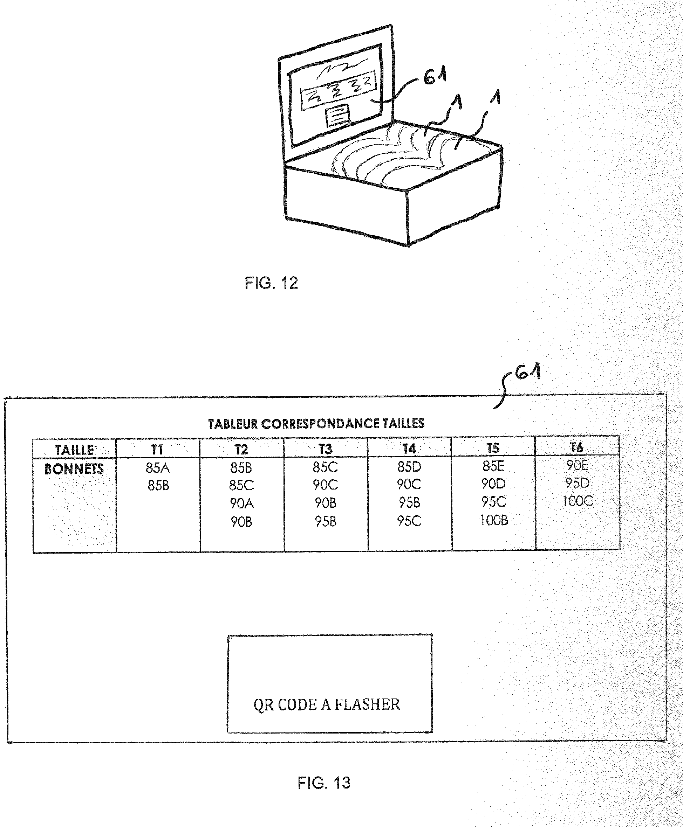

La figure 12 illustre le conditionnement de soutien-gorge selon l'invention, de différentes tailles afin de trouver celle appropriée à une utilisatrice. Ce coffret pourra comprendre 6 tailles différentes de soutien gorge et un document collé sur la face interne du couvercle du coffret, qui établira la correspondance entre les tailles des modèles de soutien gorge selon l'invention (taille 1 à taille 6) et celles de soutiens gorges classiques (85A à 100C) conformément à la figure 13. Ce document pourra être muni d'un QR CODE à flasher par un terminal mobile équipé d'une application le permettant, afin de visualiser un film explicatif sur la mise en place du soutien gorge selon l'invention (fixation de crochets, ajustement des bretelles).

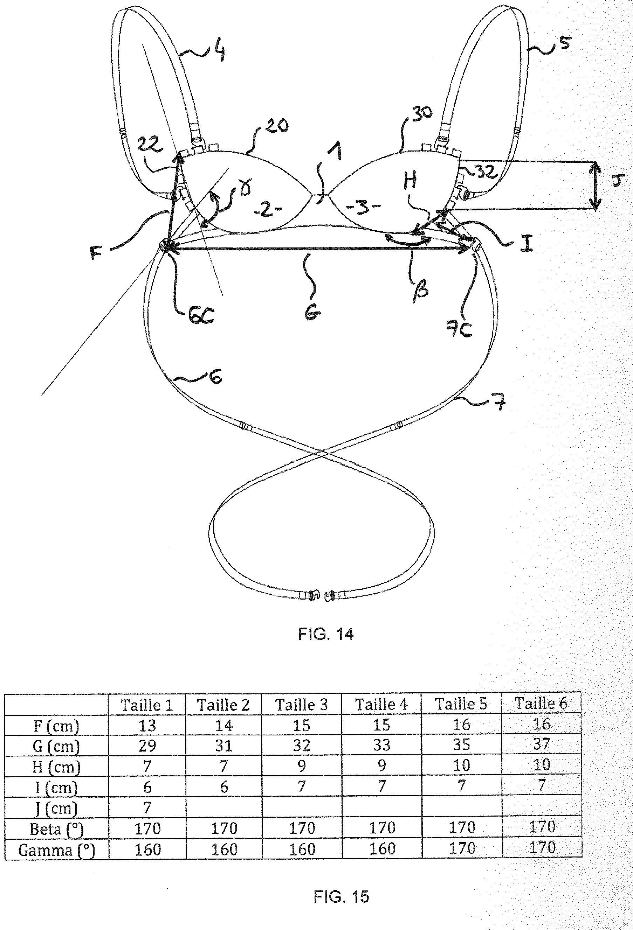

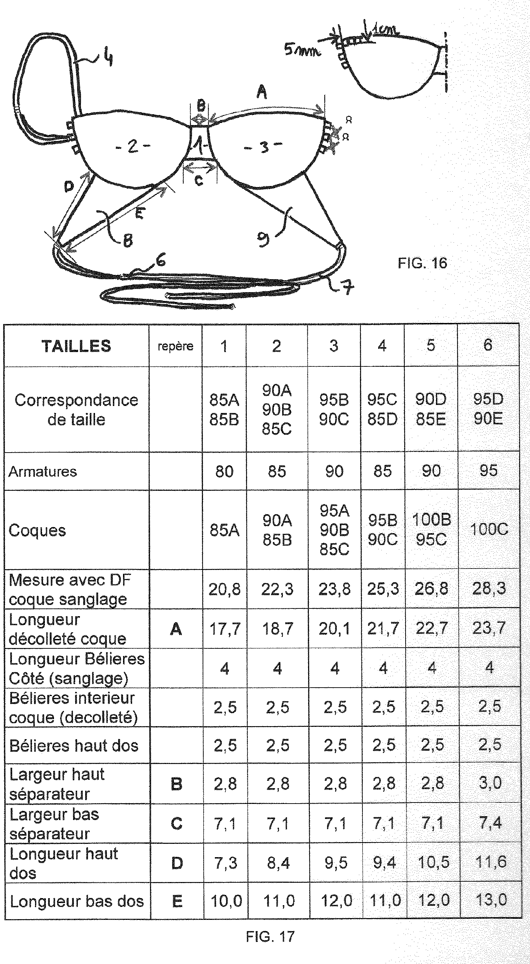

Les figures 14 à 17 viennent illustrer les différentes dimensions importantes du soutien gorge selon l'invention, en fonction des tailles proposées.

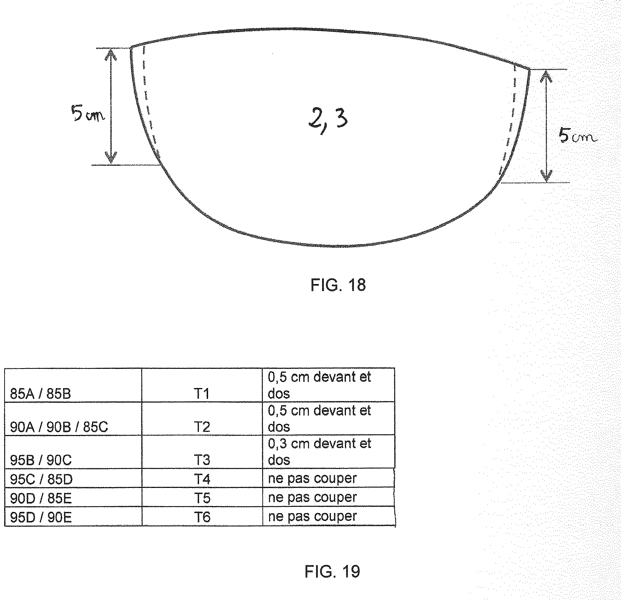

Les figures 18 et 19 illustrent l'adaptation de coques de bonnets de soutien gorge classique pour former les coques du soutien gorge selon l'invention et consistant principalement en une découpe des côtés de chaque bonnet selon un profil sensiblement incurvé d'une largeur comprise entre 0,3 et 0,5 cm sur une hauteur de 5 cm

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Soutien-gorge (1) sans bretelle dorsale comprenant deux bonnets (2, 3) reliés entre eux latéralement, chaque bonnet (2, 3) comprenant un bord supérieur (20, 30) et un bord inférieur (21, 31) pourvus respectivement d'une bretelle de soutien (4, 5) et d'une bretelle de tension (6, 7), ainsi qu'un bord latéral extérieur (22, 32) reliant les bords supérieur et inférieur, **caractérisé en ce que** le soutien-gorge (1) comprend un élément de liaison (8, 9) de la bretelle de tension (6, 7) au bonnet (2, 3), ledit élément de liaison (8, 9) s'étendant sous le bonnet (2, 3) et présentant un arrangement en forme de triangle, deux des sommets du triangle constituant des points de liaison (6A, 6B, 7A, 7B) de l'élément avec le bord inférieur du bonnet (2, 3), le troisième sommet constituant un point de jonction (6C, 7C) de l'élément avec la bretelle de tension (6, 7), l'élément de liaison (8, 9) étant arrangé avec le bonnet (2, 3) de manière à ce que la bretelle de tension (6, 7), au voisinage du point de jonction (6C, 7C), s'étend dans une direction présentant un écartement angulaire avec le plan horizontal compris entre 45 degrés et 90 degrés, et **en ce que** la bretelle de soutien (4, 5) relie le bord supérieur (20, 30) du bonnet (2, 3) au côté supérieur (40) de l'élément de liaison (8, 9).

2. Soutien-gorge (1) selon la revendication 1, **caractérisé en ce que** les points de liaison (6A, 6B, 7A, 7B) de l'élément de liaison (8, 9) se situent sur le bord inférieur du bonnet (2, 3) associé, entre le bord latéral extérieur et le point médian de ce dernier.

3. Soutien-gorge (1) selon l'une quelconque des revendications précédentes, **caractérisé en ce que** l'élément de liaison (8, 9) est arrangé avec le bonnet (2, 3) de manière à ce que la bretelle de tension (6, 7), au voisinage du point de jonction (6C, 7C), s'étend dans une direction présentant un écartement angulaire avec le plan horizontal compris entre 70 degrés et 90 degrés.

4. Soutien-gorge (1) selon l'une quelconque des revendications 1 à 3, **caractérisé en ce que** l'élément de liaison (8, 9) est formé par une bride (80, 90) s'étendant sous le bonnet (2, 3), les extrémités de ladite bride (80, 90) constituant les points de fixation.

5. Soutien-gorge (1) selon la revendication 4, **caractérisé en ce que** la bretelle de tension (6, 7) est raccordée à la bride (80, 90) au moyen d'une attache (26, 27) apte à coulisser le long de ladite bride (80, 90).

6. Soutien-gorge (1) selon la revendication 4 ou la revendication 5, **caractérisé en ce que** la bride (80, 90) est élastique.

7. Soutien-gorge (1) selon l'une quelconque des revendications 1 à 3, **caractérisé en ce que** l'élément de liaison (8, 9) est formé par une pièce de tissu extensible délimitée, entre le point de jonction et chacun des points de liaison, par une bordure élastique.

8. Soutien-gorge (1) selon l'une quelconque des revendications 1 à 7, **caractérisé en ce que** chaque bretelle de tension (6, 7) comporte à leur extrémité libre des moyens d'attache réciproque (16, 17).

9. Soutien-gorge (1) selon l'une quelconque des revendications 1 à 8, **caractérisé en ce que** le bord supérieur (20, 30), et le bord latéral extérieur (22, 32) de chaque bonnet (2, 3) et/ou le côté supérieur (40) de l'élément de liaison (8, 9) sont pourvus respectivement d'une rangée d'au moins deux attaches (12, 13, 14, 15) aptes à recevoir une attache complémentaire (14, 24, 15, 25) ménagée à chaque extrémité de la bretelle de soutien (4, 5).

10. Soutien-gorge (1) selon l'une quelconque des revendications précédentes, **caractérisé en ce que** l'attache (13) d'une extrémité de bretelle de soutien est pourvue d'un crochet de sécurité comprenant une partie de fixation (43) à l'extrémité de la bretelle de soutien (4, 5), deux ouvertures (42, 44) de passage d'une portion libre de l'attache (13), séparées l'une de l'autre par une portion d'anneau (46) sur laquelle prend appuie la portion d'attache (13) et deux pattes de retenue (50) de la portion d'attache.

11. Soutien gorge selon l'une quelconque des revendications précédentes, **caractérisé en ce que** les bords supérieurs (20, 30) des bonnets (2, 3) sont pourvus d'une découpe (52, 54) débouchant sur une entre-gorge (53) du soutien gorge, l'entre gorge présentant une forme filiforme et définissant avec les deux découpes des deux bonnets (2, 3) un espace libre ou échancrure (50) formant décolleté.

12. Ensemble de lingerie, comprenant le soutien gorge selon l'une quelconque des revendications précédentes, et un bas de sous vêtement (56, 57) comprenant des passants (58) de passage des bretelles de tension.

13. Ensemble de lingerie selon la revendication 12, **caractérisé en ce que** le bas de sous vêtement est de type taille basse et/ou de type gainant ou sculptant notamment du fessier de l'utilisatrice.

14. Kit de vente du soutien gorge selon l'une quelconque des revendications précédentes, comprenant un soutien gorge selon l'une des revendications précédentes pourvu d'un jeu initial de bretelles de soutien (4, 5) et bretelles de tension (6, 7), amovibles, et au moins un jeu supplémentaire de deux bretelles de soutien amovibles (4, 5) et de deux bretelles de soutien amovibles (4, 5) de remplacement du jeu initial, de texture et/ou couleur et/ou opacité et/ou longueur et/ou largeur différentes de celles du jeu initial de bretelles de soutien et de tension du soutien gorge.

15. Kit selon la revendication 14, comprenant au moins deux soutiens gorges de tailles différentes, et un identifiant de type puce RFID ou QR code apte à donner accès à un support d'information distant par la voie d'un terminal mobile connecté à un réseau de communication.
